# EUROPÄISCHE PATENTANMELDUNG

(11) **EP 2 696 323 A2**
(43) Veröffentlichungstag der Anmeldung: **12.02.2014**
(21) Anmeldenummer: 13178984.4
(22) Anmeldetag: 01.08.2013
(51) Int. Cl.: G06Q 30/02

(54) **Präsentationsvorrichtung**

(30) Priorität: 09.08.2012 DE 202012102999 U
(71) Anmelder: Muhziroglu, Aydin, 87700 Memmingen (DE)
(72) Erfinder: Muhziroglu, Aydin, 87700 Memmingen (DE)
(74) Vertreter: Pfister, Stefan Helmut Ulrich

(57) **Zusammenfassung**

Die Erfindung betrifft eine Präsentationsvorrichtung umfassend: eine Präsentationseinheit zur Anordnung eines Präsentationsobjektes, wobei eine Fernsteuerung von Bewegungen der Präsentationseinheit vorgesehen ist. Die Erfindung betrifft auch ein Verfahren zur Zugriffssteuerung auf eine Präsentationsvorrichtung.

## Beschreibung

Die Erfindung betrifft eine Präsentationsvorrichtung umfassend eine Präsentationseinheit zur Aufnahme eines Präsentationsobjektes.

Derartig beschriebene Vorrichtungen eignen sich beispielsweise für die Erfassung von dreidimensionalen Bildern eines Gegenstandes, um im Zuge einer nachfolgenden Bearbeitung einen besseren Gesamteindruck des Gegenstandes zu erhalten. Auch für technische Mess- oder Erfassungsaufgaben ist eine dreidimensionale Erfassung des Gegenstandes vorteilhaft.

Insbesondere für den Handel im Internet wird eine umfassende Darstellung der angebotenen Gegenstände zunehmend als wichtig erachtet. Um dieser Notwendigkeit Rechnung zu tragen, werden die angebotenen Gegenstände von mehreren Seiten bildlich erfasst, um hieraus dann einen Gesamteindruck, beispielsweise in Form eines dreidimensionalen Bildes zu erzeugen.

Auch für die Digitalisierung von Gegenständen ist eine dreidimensionale Erfassung des Gegenstandes sinnvoll und wünschenswert, um hierdurch das virtuelle Abbild des Gegenstandes zu verbessern und zu verfeinern.

Die bekannten Vorrichtungen zielen darauf ab, dass eine vorbestimmte Ansicht des Gegenstandes bzw. eines Präsentationsobjektes erzeugt wird und der Nutzer somit keinerlei Möglichkeiten erhält, weitere Perspektiven, Ansichten oder Detailansichten des Gegenstandes selbständig festzulegen, um sich so einen umfassenden Eindruck des Präsentationsobjektes zu verschaffen. In der Regel werden die Bilddaten einmalig erfasst und dann in Form einer Bild- oder Videodatei abgelegt. Die Zugriffsmöglichkeiten des Nutzers beschränken sich dabei auf die abgelegten Bilddaten bzw. Videodateien.

Dies wird oftmals als nachteilig empfunden, da in den zur Verfügung gestellten Bilddateien keine weitere Manipulations- bzw. Veränderungsmöglichkeit für den Nutzer besteht. Der Nutzer ist somit auf die nicht von ihm festgelegten Perspektiven beschränkt. Ebenfalls bekannt ist die Darstellung von Objekten in einem Ladengeschäft beziehungsweise in einem Schaufenster. Auch hier ist der Betrachter auf vorgegebene Objektpositionen beschränkt beziehungsweise hat keine Zugriffsmöglichkeit, um auch andere Ansichten des Gegenstandes zu betrachten.

Aufgabe der vorliegenden Erfindung ist es, ein Feedback-System zur Verfügung zu stellen, bei dem der Nutzer selbst Einfluss auf die Objektposition und -perspektive sowie aufgenommenen Bilddaten des Objektes nehmen kann.

Diese Aufgabe wird durch eine Weiterbildung der eingangs beschriebenen Präsentationsvorrichtung sowie ein Verfahren zur Zugriffssteuerung erreicht. Eine wie eingangs beschriebene Präsentationsvorrichtung wird dadurch weitergebildet, dass eine Fernsteuerung von Bewegungen der Präsentationseinheit vorgesehen ist. Durch die Fernsteuerung erhält der Nutzer die Möglichkeit, selbständig Perspektiven und Aufnahmepositionen bzw. Präsentationspositionen des Präsentationsobjektes festzulegen. Durch die vorgesehene Fernsteuerung muss der Nutzer hierzu nicht das Präsentationsobjekt direkt und selbst bewegen, sondern kann dies auch örtlich bzw. räumlich getrennt von der Präsentationseinheit bzw. der Präsentationsvorrichtung und/oder dem Präsentationsobjekt vornehmen. Durch die Fernsteuerung erhält der Nutzer beispielsweise die Möglichkeit, in einem Schaufenster ausgestellte oder in einer entfernten Örtlichkeit eines Ladengeschäftes positionierte Objekte zu drehen beziehungsweise so auszurichten, dass diese von ihm gewünschte Perspektive beziehungsweise Position eingenommen wird. Er erhält somit trotz der räumlichen Trennung beziehungsweise der durch eine Scheibe oder Begrenzung gebildeten Barriere die Möglichkeit, auf das Objekt beziehungsweise dessen Position zuzugreifen. Der Nutzer kann somit vor Ort, jedoch ohne direkten Zugriff die Position des Objektes bestimmen und dieses aus mehreren, von ihm selbst bestimmen Perspektiven betrachten.

Vorteilhaft wird in diesem Zusammenhang angesehen, wenn als Bewegung eine Drehung oder Verschwenkung der Präsentationseinheit, insbesondere um eine oder mehrere Dreh- oder Schwenkachsen vorgesehen ist. Im Zusammenhang mit der erfindungsgemäß vorgesehenen Fernsteuerung kann somit der Nutzer die optimale Präsentationsposition sowie die Bewegung der Präsentationseinheit bzw. des Präsentationsobjektes in nahezu allen Raumrichtungen festlegen.

Die Präsentationseinheit ist dabei bevorzugt als um eine Drehachse drehbarer Tisch oder Teller ausgebildet. Zusätzlich kann hier auch eine Schwenkachse vorgesehen werden, so dass eine Verschwenkung des Tisches oder Tellers durchgeführt werden kann.

Günstigerweise erfolgt die Fernsteuerung kabellos. Die Weiterbildung der Vorrichtung sieht vor, dass eine örtliche oder räumlich getrennte Fernsteuerung vorgesehen ist. Die Übertragung der Steuersignale erfolgt dabei bevorzugt netzwerk- oder internetgestützt. Dies bietet die Möglichkeit, dass der Nutzer beispielsweise über einen Internet-PC auf die Präsentationsvorrichtung zugreifen kann, um deren Steuerung zu übernehmen. Hierdurch erhält der Nutzer, beispielsweise auch unterstützt durch eine Live-Übertragung der erfassten Bilddaten die Möglichkeit, unmittelbar Einfluss auf die Positionierung des Präsentationsobjektes und die von ihm gewünschten Darstellungsperspektiven zu nehmen.

Die Vorrichtung wird dadurch vorteilhaft weitergebildet, dass der Präsentationseinheit wenigstens eine, bevorzugt zwei oder mehr Kameras zugeordnet sind, die ebenfalls durch den Nutzer ferngesteuert, beispielsweise über ein Mobilgerät oder einen internetfähigen PC, bedient werden können. Kameraposition und - einstellung können durch den Nutzer ferngesteuert werden.

Es wird als vorteilhaft angesehen, wenn der Präsentationsvorrichtung eine Empfangseinrichtung für Steuerbefehle und eine

Steuereinrichtung für die Umsetzung der empfangenen Steuerbefehle in eine Bewegung, insbesondere eine Drehung oder Verschwenkung der Präsentationseinheit und/oder der Kameras zugeordnet ist. Neben der unmittelbaren Bewegung des Drehtisches oder Drehtellers bzw. der Präsentationseinheit selbst besteht selbstverständlich auch die Möglichkeit, dass sich das Präsentationsobjekt auf einer ortsfesten Präsentationseinheit befindet und statt einer Bewegung der Präsentationseinheit eine Bewegbarkeit der Kameras vorgesehen ist.

Auch hier erweist sich eine netzwerk- oder internetübertragene Fernsteuerung als vorteilhaft.

Um die vom Nutzer angestoßenen Bewegungen durchzuführen, erweist es sich als günstig, wenn die Präsentationseinheit und/ oder die Kameras wenigstens einen Drehantrieb aufweist/aufweisen, insbesondere wobei die Steuereinrichtung zur Steuerung des wenigstens einen Drehantriebes vorgesehen ist. Der Nutzer überträgt somit die Steuerbefehle, beispielsweise über ein Menue oder einen digitalen Steuermechanismus an die Steuereinrichtung. Diese setzt die empfangenen Steuerbefehle um und steuert entsprechend den Drehantrieb bzw. die Drehantriebe, um die vom Nutzer gewünschten Positionen des Präsentationsobjektes zu erreichen. Als vorteilhaft wird angesehen, wenn die Steuerbefehle derart umgesetzt werden, dass eine möglichst zügige Erreichung der gewünschten Positionen möglich ist. Hierzu können Steuerbefehle sowohl an die Präsentationseinheit, als auch an die Kameras ausgegeben werden. Die Steuerbefehle werden hierzu entsprechend in der Steuereinheit umgerechnet und an die jeweiligen Elemente bzw. die diesen zugeordneten Antriebe oder Drehantriebe weitergegeben.

Die Empfangseinrichtung ist günstigerweise geeignet, um die Steuerbefehle von einem örtlich von der Präsentationsvorrichtung getrennten Nutzer oder einer Bedienperson zu empfangen. Vorteil dieser Weiterbildung der Präsentationsvorrichtung ist es, dass eine Steuerung der gesamten Präsentationsvorrichtung und die jeweils nutzergewünschte Positionierung des Präsentationsobjektes durch einen Nutzer durchgeführt werden kann, der sich nicht in der Nähe der Präsentationsvorrichtung befindet. Als besonders günstig wird angesehen, wenn eine internet- oder netzwerkbasierte Weitergabe der Steuerbefehle erfolgt.

Vorteilhafterweise ist die Empfangseinrichtung geeignet, eine Registrierung, Freigabe und/oder Priorisierung des Nutzers und/oder von Nutzeranfragen durchzuführen. Zusätzlich oder alternativ kann die Empfangseinrichtung auch dazu geeignet sein, die Steuerbefehle der Nutzer zu speichern, um hieraus ein Nutzerprofil abzuleiten und/oder von einer Vielzahl von Nutzern als vorteilhaft angesehene Objektpositionen zu ermitteln, um dadurch die Qualität der üblicherweise zur Verfügung gestellten Bilddaten bzw. Videodaten zu verbessern und/oder an die Nutzeranfragen anzupassen.

Als vorteilhaft erweist sich eine Anbindung der Empfangseinrichtung an ein Datennetz. Die Steuerbefehle werden dabei über das Datennetz übertragen und von der Empfangseinrichtung empfangen. Dies ergibt ebenfalls Vorteile im Zusammenhang mit der Verwendung der Präsentationsvorrichtung durch einen räumlich getrennten Nutzer. Die Anbindung der Empfangseinrichtung erfolgt dabei vorteilhaft als W-LAN, LAN, Bluetooth, Mobilfunknetz, UMTS, LTE, HSDPA, Telefonnetz, Datenkabelnetz, Stromnetz oder eine Funkverbindung mit geeigneten Funkstandards. Auch diese Weiterbildung der erfindungsgemäßen Präsentationsvorrichtung erweist sich im Zusammenhang mit einem Fernzugriff auf die Präsentationsvorrichtung als vorteilhaft.

Alternativ oder zusätzlich erweist es sich als günstig, wenn die Empfangseinrichtung geeignet ist, von einem Mobilgerät gesendete Steuerbefehle zu empfangen. Unter Umgehung der zuvor genannten Anbindungsarten kann somit ein direkter Zugriff über ein Mobilgerät, beispielsweise ein internet- oder datenfähiges Mobiltelefon, einen mobilen PC, einen Tablet-PC oder dergleichen erfolgen, über den die Steuerbefehle direkt an die Empfangseinrichtung gesendet werden. Im Mobilgerät kann hierfür eine geeignete Steuersoftware zur Verfügung gestellt werden, beispielsweise in Form einer sogenannten App. Die Steuersoftware kann hierbei beispielsweise geeignet sein, die Verbindung zwischen der Empfangseinheit und dem Mobilgerät selbstständig und bevorzugt unter Auswahl der geeigneten Verbindungsart (beispielsweise W-LAN, Bluetooth, UMTS etc.) herzustellen. Die Steuersoftware stellt zudem ein geeignetes Bedieninterface zur Verfügung und ermöglicht beziehungsweise vereinfacht damit die Fernsteuerung der Präsentationsvorrichtung.

Um die Empfangseinrichtung in ein bestehendes Netzwerk einzubinden, erweist es sich als vorteilhaft, wenn die Empfangseinrichtung USB-, Bluetooth-, W-LAN-, LAN- oder Funkkonnektivität aufweist.

Die Präsentationsvorrichtung wird dadurch vorteilhaft weitergebildet, dass die Präsentationseinheit und/ oder die Kameras kabelgebunden, insbesondere per USB- oder Netzwerkkabel oder aber kabellos mit der Steuereinrichtung oder der Empfangseinrichtung verbindbar ist/sind. Die derart weitergebildete Präsentationsvorrichtung hat den Vorteil, dass die Präsentationseinheit bzw. die Kameras in einfacher Art und Weise mit der Steuereinrichtung bzw. der Empfangseinrichtung verbunden werden können, um ein funktionierendes System und eine einsatzfähige Präsentationsvorrichtung zur Verfügung zu stellen. Diese Weiterbildung der Erfindung ist im Zusammenhang mit den vorhergehend beschriebenen Ausführungsformen zu sehen und bietet die Möglichkeit, hier externen Nutzern schnell und in einfacher Art und Weise einen Zugriff auf die Präsentationsvorrichtung zu ermöglichen.

Die Präsentationsvorrichtung wird dadurch weitergebildet, dass eine Datenerfassungs-, Datenauswertungs- und/oder -speichereinheit in der Präsentationsvorrichtung vorgesehen ist. Diese Einheit dient für die Erfassung, Auswertung und/oder Speicherung von durch die Kamera(s) aufgenommene Bilddaten, Steuerbefehle, Präsentationseinheit- und/oder Kameraposition(en), Nutzungszeiten, Nutzern, Nutzerverhalten und/oder Nutzerprofilen.

Eine als vorteilhaft angesehene Weiterbildung der Präsentationsvorrichtung sieht vor, dass diese eine Datenausgabe und/oder Sendeeinheit für von der oder den Kamera(s) aufgenommene Bilddaten aufweist. Die Datenausgabe und/oder Sendeeinheit ist dabei bevorzugt als Display, Bildschirm oder Projektor ausgebildet oder weist ein Display, einen Bildschirm oder einen Projektor auf. Um eine Ausgabe beziehungsweise Versendung der Bilddaten an einen externen Nutzer durchzuführen, beispielsweise über eine Internet- oder Netzwerkanbindung, erweist es sich als vorteilhaft, wenn die Datenausgabe- und/oder Sendeeinheit an ein Datennetz angebunden ist. Die von der oder den Kamera(s) erfassten Bilddaten werden dann über das Datennetz an eine Anzeigevorrichtung beziehungsweise eine Speichereinheit oder einen Computer, die/der insbesondere räumlich von der Datenausgabe- und/oder Sendeeinheit getrennt vorliegt, übertragen. Die Anbindung der Datenausgabe- oder Sendeeinheit ist bevorzugt als W-LAN, LAN, Bluetooth, Mubilfunknetz, UMTS, Telefonnetz, Datenkabel, Stromnetz- oder Funkverbindung ausgebildet und erlaubt den Zugriff eines externen, bevorzugt räumlich getrennten Nutzer auf die Datenausgabe- und/oder Sendeeinheit und den Abruf der erfassten Bilddaten aus der Ferne. Ist lediglich eine Fernsteuerung der Präsentationseinheit in einem Schaufenster, einem Ausstellungsraum oder in einem Ladenlokal vorgesehen, so kann selbstverständlich auch auf die Datenausgabe- und/oder Sendeeinheit verzichtet werden. Auch in diesem Zusammenhang ist es jedoch denkbar und möglich, dass neben der unmittelbaren visuellen Erfassung durch den Nutzer eine Ausgabe der beispielsweise parallel erfassten Bilddaten durch den Nutzer beziehungsweise ein Empfangsgerät (Mobilgerät, Internet-PC etc.) erfolgt.

Die Datenausgabe- und/oder Sendeeinheit ist daneben vorteilhafterweise auch geeignet, Bilddaten direkt an ein Mobilgerät, beispielsweise ein Mobiltelefon, einen tragbaren Computer, einen Tablet-PC oder dergleichen, entweder über ein Internet- oder Datennetz oder direkt durch die zuvor genannten Anwendungsmöglichkeiten, wie beispielsweise Bluetooth, UMTS oder das Mobilfunknetz zu übertragen. Auch die Datenausgabe- und/oder Sendeeinheit weist bevorzugt eine USB-, Bluetooth-, W-LAN- oder LAN- oder Funkkonnektivität auf und erlaubt somit deren einfache Anbindung an ein bestehendes Netzwerk, ein Datennetz oder ein Funknetz beziehungsweise eine vereinfachte Anbindung an das Internet.

Eine als günstig angesehene Weiterbildung der Präsentationsvorrichtung sieht vor, dass die Datenerfassungs-, Auswertungs- und/oder Speichereinheit ein Nutzeridentifizierungs- und/oder Nutzerfreigabesystem beinhaltet. In diesem Zusammenhang wird es als Vorteil angesehen, wenn beispielsweise ein Internetzugang zu der Präsentationsvorrichtung vorgesehen ist und in der Datenerfassungs- und/oder Speichereinheit ein Login eines räumlich getrennten Nutzers erfolgt. Die Einheit führt nach dem Login eine Identifizierung des Nutzers durch beziehungsweise erlaubt diesem die Registrierung. Nach Abschluss von Identifizierung oder Registrierung erfolgt die Freigabe oder das Anlegen eines Nutzerprofils. In diesem Nutzerprofil werden beispielsweise Präferenzen des Nutzers gespeichert. Gleichzeitig oder alternativ erhält der Nutzer Empfehlungen für möglicherweise für ihn interessante Präsentationsobjekte. Im Profil wird auch das Nutzerverhalten abgespeichert und es besteht die Möglichkeit, dass der Nutzer beispielsweise selbstständig Favoriten anlegt, das heißt Präsentationsobjekte, die der Nutzer öfter betrachtet oder abruft.

Nach Freigabe des Nutzers erhält dieser Zugriff auf die Steuereinheit und kann über Steuerbefehle oder ein Bedienpanel, beispielsweise ein digitales, rechnerbasiertes Bedienpanel, die Steuerung der Präsentationsvorrichtung übernehmen und damit die von ihm bevorzugten Präsentationspositionen ansteuern. Die Ausgabe der erfassten Bilddaten erfolgt dann beispielsweise in einem Live-Stream. Das heißt, die Steuerbefehle werden unmittelbar umgesetzt und die erfassten Bilddaten umgehend an den Nutzer zurückgesendet, sodass dieser auf seinem Anzeigegerät, beispielsweise einem internetfähigen Computer, einem internetfähigen Mobiltelefon, einem Tablet-PC oder dergleichen, die Auswirkungen der Steuerbefehle auf das Präsentationsobjekt sieht. Parallel oder alternativ hierzu besteht die Möglichkeit, dass die erfassten Bilddaten, basierend auf den Steuerbefehlen des Nutzers, erfasst und abgespeichert werden. Hierzu kann beispielsweise im Profil des Nutzers dessen Nutzerpräferenz oder eine Historie der erfassten Bilddaten oder Objektposition abgelegt werden, um hieraus letztendlich Rückschlüsse auf das Nutzerverhalten zu erlangen. Auch besteht die Möglichkeit, dass der Nutzer Favoriten hinterlegt und somit die von ihm zuletzt betrachteten oder bevorzugt betrachteten Präsentationsobjekte zeitlich versetzt wieder aufsucht beziehungsweise betrachtet oder aber die hierzu gespeicherten Bilddaten erneut abruft.

In einer bevorzugten Weiterbildung der Präsentationsvorrichtung ist vorgesehen, dass die Präsentationseinheit relativ zu der oder den Kamera(s) bewegbar ist. Alternativ hierzu beziehungsweise zusätzlich besteht auch die Möglichkeit, dass die Kamera(s) relativ zu der Präsentationseinheit bewegbar ausgebildet ist/sind.

Als günstig und vorteilhaft wird angesehen, wenn die Präsentationsvorrichtung mehrere Präsentationseinheiten und/oder Kamera(s) aufweist. Die zur Verwendung vorgesehene Präsentationseinheit oder Kamera ist dann günstigerweise vom Nutzer auswählbar. In diesem Zusammenhang wird es auch als vorteilhaft angesehen, wenn einer einzigen Präsentationseinheit mehrere Kameras zugeordnet sind, sodass der Nutzer die Wahlmöglichkeit hat, welche Kamera er bedienen möchte.

In einer vorteilhaften Weiterbildung der Präsentationsvorrichtung gemäß der vorliegenden Erfindung ist vorgesehen, dass die Empfangseinrichtung, die Steuereinrichtung, die Datenerfassungs-, Auswertungs- und/oder Speichereinheit und/oder die Datenausgabe- und/oder Sendeeinheit in einem Gerät, insbesondere in einem Computer zusammengefasst vorgesehen sind und die Präsentationseinheit und die Kamera(s) mit diesem Gerät verbindbar ist/sind.

Die erfassten Bilddaten werden bevorzugt als Einzelbild, Bildsequenz oder Live-Stream dargestellt und/oder über das Internet oder ein Netzwerk abgespeichert. Dies hat den Vorteil, dass die Daten für den Nutzer schnell und in einfacher Art und Weise, beispielsweise über einen einfachen Internetzugriff oder eine Website, zugänglich sind und von dort schnell auf die Präsentationsvorrichtung zugegriffen werden kann.

Gleichermaßen von der Erfindung umfasst ist ein Verfahren zur Zugriffssteuerung auf eine Präsentationsvorrichtung. Das Verfahren findet dabei insbesondere Anwendung im Zusammenhang mit einer wie zuvor ausgeführten Präsentationsvorrichtung. Das Verfahren umfasst die Schritte: Empfangen von Steuerbefehlen von insbesondere räumlich von der Präsentationsvorrichtung getrennten Nutzern und Umsetzen der Steuerbefehle in eine Bewegung der Präsentationsvorrichtung. Als vorteilhaft wird in diesem Zusammenhang angesehen, wenn die Steuerbefehle über ein Netzwerk oder eine Internetverbindung übertragen werden und eine Umsetzung der Steuerbefehle in eine Drehung und/oder Verschwenkung einer Präsentationseinheit und/oder einer Kamera erfolgt. Der Nutzer muss somit nicht unmittelbar sich in der Nähe der Präsentationsvorrichtung aufhalten, sondern kann räumlich getrennt die Bewegung der Präsentationsvorrichtung beeinflussen. Anstelle von herkömmlichen Darstellungsvarianten, bei dem dem Nutzer keinerlei Einfluss auf die Darstellung beziehungsweise Präsentation sowie Perspektive gegeben wird, ermöglicht es das Verfahren, die Präsentationsvorrichtung nach den Wünschen des Benutzers zu bewegen und stellt somit ein Online-Verfahren zur Verfügung, bei dem der Nutzer direkt die Präsentationsvorrichtung beeinflusst.

Eine bevorzugte Weiterbildung des Verfahrens sieht vor, dass vor dem Empfangen oder dem Umsetzen der Steuerbefehle eine Registrierung oder eine Freigabe des entsprechenden Nutzers vorgesehen ist. Dies verhindern Konflikte zwischen den Steuerbefehlen mehrerer Nutzer. Somit ist ein priorisierter Nutzer in der Lage, die Steuerbefehle an die Präsentationsvorrichtung zu geben. Dieser muss sich vor dem Zugriff auf die Präsentationsvorrichtung jedoch registrieren lassen beziehungsweise benötigt eine Freigabe, um die Steuerbefehle abgeben zu können.

In diesem Zusammenhang wird es als günstig angesehen, wenn vor dem Umsetzen der Steuerbefehle eine Priorisierung von Nutzeranfragen erfolgt. Auch dies verhindert Konflikte zwischen widersprüchlichen Steuerbefehlen.

Als vorteilhaft wird angesehen, wenn im Verfahren der Empfang von mit einem Mobilgerät gesendeten Steuerbefehlen vorgesehen ist.

Eine Weiterbildung des Verfahrens sieht vor, dass zusätzlich ein Schritt der Erfassung, Erwertung und/oder Speicherung von durch die Kameras aufgenommenen Bilddaten, Steuerbefehlen, Präsentations- oder Kameraposition Nutzungszeiten, Nutzer, Nutzerverhalten und/oder Nutzerprofilen erfolgt. Dies erlaubt es eine Priorisierung der Nutzeranfragen durchzuführen beziehungsweise Nutzern entsprechende Kamera- beziehungsweise Präsentationsvorrichtungspositionen vorzuschlagen, in Abhängigkeit vom jeweils erstellten Nutzerprofil. Die Darstellung kann somit weiter personalisiert werden. Auch können bevorzugte Verhaltensmuster aufgezeichnet und für eine Offline-Umsetzung der Präsentationsvorrichtungsbewegung genutzt werden.

Eine vorteilhafte Weiterbildung des Verfahrens sieht vor, dass die Ausgabe von erfassten Bilddaten über das Datennetz in einer Anzeigevorrichtung, insbesondere an eine räumlich von der Datenausgabe und/oder -sendeeinheit getrennte Anzeigevorrichtung vorgesehen ist.

Alternativ oder zusätzlich besteht selbstverständlich die Möglichkeit, dass die erfassten Bilddaten bevorzugt direkt an ein Mobilgerät übertragen werden.

Im Zusammenhang mit dem Verfahren sieht eine Weiterbildung vor, dass die erfassten Bilddaten als Einzelbild, Bildsequenz oder Live-Stream dargestellt und/oder über das Internet oder ein Netzwerk versendet werden beziehungsweise über das Internet oder ein Netzwerk abrufbar zur Verfügung gestellt sind.

Das Verfahren sieht in einer Weiterbildung vor, dass eine Zugriffssteuerung auf mehrere Präsentationseinheiten oder Kameras vorgesehen ist, sodass hier beispielsweise eine dreidimensiona-le Darstellung erfolgen kann beziehungsweise der Nutzer die Wahl erhält zwischen verschiedenen Positionen, die zudem vom Nutzer selbst beeinflusst beziehungsweise bestimmt werden können.

In sämtlichen zuvor beschriebenen Ausführungsformen bleibt die Erfindung nicht auf die Präsentation von unbewegten Objekten/Gegenständen beschränkt, sondern ist auch für die Präsentation von Menschen oder sonstigen beweglichen beziehungsweise belebten Objekten geeignet.

In diesem Zusammenhang wird insbesondere darauf hingewiesen, dass alle im Bezug auf die Vorrichtung beschriebenen Merkmale und Eigenschaften aber auch Verfahrensweisen sinngemäß auch bezüglich der Formulierung des erfindungsgemäßen Verfahrens übertragbar und im Sinne der Erfindung einsetzbar und als mitoffenbart gelten. Gleiches gilt auch in umgekehrter Richtung, das bedeutet, nur im Bezug auf das Verfahren genannte, bauliche also vorrichtungsgemäße Merkmale können auch im Rahmen der Vorrichtungsansprüche berücksichtigt und beansprucht werden und zählen ebenfalls zur Offenbarung.

In der Zeichnung ist die Erfindung insbesondere in einem Ausführungsbeispiel schematisch dargestellt. Es zeigen:
- Fig. 1: eine schematisierte Darstellung der erfindungsgemäßen Präsentationsvorrichtung,
- Fig. 2: ein Ablaufschema des Zugriffs auf die Präsentationsvorrichtung.

In den Figuren sind gleiche oder einander entsprechende Elemente jeweils mit den gleichen Bezugszeichen bezeichnet und werden daher, sofern nicht zweckmäßig, nicht erneut beschrieben.

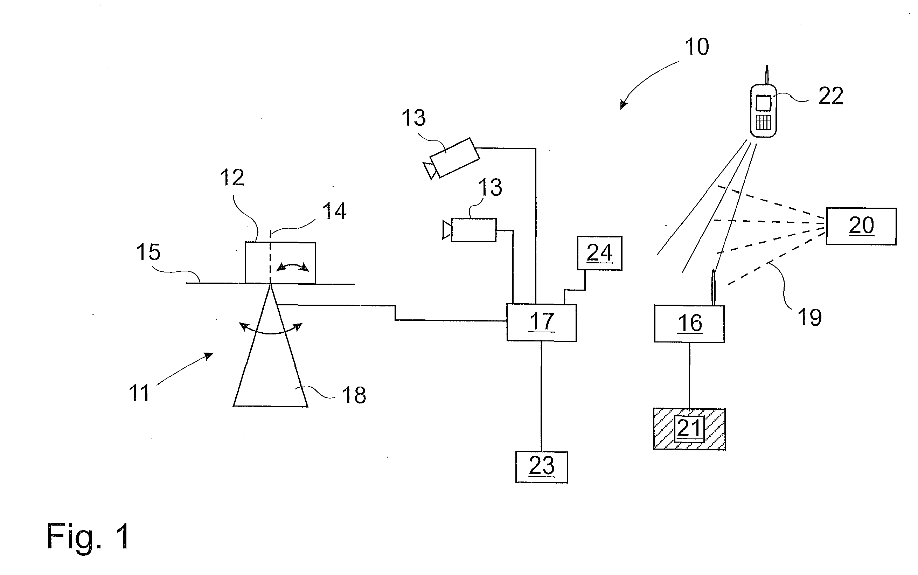

Fig. 1 zeigt einen schematisierten Aufbau einer möglichen Ausführungsform der erfindungsgemäßen Präsentationsvorrichtung 10. Diese umfasst eine Präsentationseinheit 11 sowie insgesamt im Ausführungsbeispiel zwei Kameras 13, die auf die Präsentationseinheit 11 ausgerichtet sind. Die Präsentationsvorrichtung 10 ist hierauf nicht beschränkt, sondern kann auch ohne die Kameras 13 ausgeführt werden. Dies ist insbesondere dann möglich beziehungsweise sinnvoll, wenn die Präsentationsvorrichtung 10 in einem Schaufenster, Ausstellungsraum oder einem Ladenlokal zum Einsatz kommt und die Nutzer vor Ort, jedoch räumlich (beispielsweise durch ein Schaufenster) getrennt die Position des Präsentationsobjektes 12 bestimmen möchten. Als Präsentationsobjekt 12 geeignet sind neben unbewegten Gegenständen auch Menschen und sonstige belebte Objekte, wie beispielsweise Tiere. Bei der Präsentationseinheit 11 handelt es sich um einen mit einem Drehantrieb 18 ausgestatteten Teller 15. Auf diesem Teller 15 aufgelegt befindet sich ein Präsentationsobjekt 12, das durch die Kameras 13 bildlich erfasst wird. Die Steuerung sowohl der Präsentationseinheit 11 als auch der Kameras 13 wird durch eine Steuereinheit 17 realisiert. Die Steuereinheit 17 steuert zum Einen die durch die Kameras 13 erfassten Aufnahmen, zum Anderen die Bewegung des Drehantriebes 18 und damit die Drehung des Tellers 15 um die Drehachse 14. In einer alternativen Weiterbildung der Erfindung ist vorgesehen, dass der Teller 15 auch verschwenkbar ist. Hierzu sind dann gesonderte, ebenfalls durch die Steuereinrichtung 17 bediente beziehungsweise angesteuerte weitere Antriebe vorgesehen.

Der Steuereinrichtung 17 zugeordnet ist eine Empfangseinrichtung 16 für Nutzerdaten beziehungsweise Steuerbefehle. Die Empfangseinrichtung 16 ist derart ausgebildet, dass diese in der Lage ist, von einem räumlich entfernten Nutzer 20 Steuerbefehle zu empfangen und diese an die Steuereinrichtung 17 weiterzugeben, sodass eine entsprechende Ansteuerung von Drehantrieb 18 beziehungsweise Kameras 13 möglich wird. Die Ausgabe der Steuerbefehle beziehungsweise deren Weitergabe an die Empfangseinrichtung 16 erfolgt dabei im Ausführungsbeispiel kabellos. Daneben besteht die Möglichkeit, dass die Steuerbefehle über ein Datennetz 21 an die Empfangseinrichtung 16 weitergegeben werden. Ebenfalls möglich ist eine Ausgabe von Steuerbefehlen an die Empfangseinrichtung 16 über ein Mobilgerät 22, im Ausführungsbeispiel ein Mobiltelefon. Während hier eine direkte Ansteuerung der Empfangseinrichtung 16 über das Mobilfunknetz dargestellt ist, besteht selbstverständlich auch die Möglichkeit, dass ein internetfähiges Mobilgerät über das Datennetz 21 auf die Empfangseinrichtung 16 zugreift, um die Steuerbefehle zu übertragen. Die erfassten Steuerbefehle werden von der Empfangseinheit 16 aufbereitet und an die Steuereinrichtung 17 weitergegeben. Hier werden die Daten in Befehle umgesetzt und die Präsentationseinheit 11 beziehungsweise die Kameras 13 entsprechend gesteuert. Der Nutzer 20 kann aus einer Mehrzahl von Steuerbefehlen, beispielsweise auf "Zoom ein", "Zoom aus", "Drehung rechts", "Drehung links", "schwenken" und so weiter auswählen, um so eine Fernsteuerung 19 der Präsentationseinheit 11 durchzuführen und das Präsentationsobjekt 12 aus verschiedenen Perspektiven über die Kameras 13 aufzunehmen. Die Kameras 13 sind insbesondere als Web-Cams ausgebildet. Der Präsentationsvorrichtung 10 zugeordnet ist eine Speichereinheit 23. Diese speichert zum Einen Informationen über den Nutzer 20 beziehungsweise die Nutzerpräferenzen und das Nutzerverhalten, zum Anderen ist die Speichereinheit 23 auch geeignet, die aufgenommenen Bilddaten zu speichern und weiterzuverarbeiten beziehungsweise aufzubereiten, sodass diese über die Datenausgabe- beziehungsweise Sendeeinheit 24 an den Nutzer 20 zurückgegeben werden können. Die gesamte Präsentationsvorrichtung 10 erlaubt ein Live-Streaming der über die Kameras 13 erfassten Bilddaten. Der Nutzer 20 hat aufgrund des Zugriffs über ein Datennetz 21 beziehungsweise das Internet oder eine Mobilverbindung die Möglichkeit, direkt auf die Präsentationsvorrichtung 10 zuzugreifen und das Präsentationsobjekt 12 in einer von ihm bevorzugten Perspektive mit den Kameras 13 zu erfassen, um sich somit einen umfassenden Eindruck über das Präsentationsobjekt 12 gemäß seiner eigenen Präferenzen zu verschaffen.

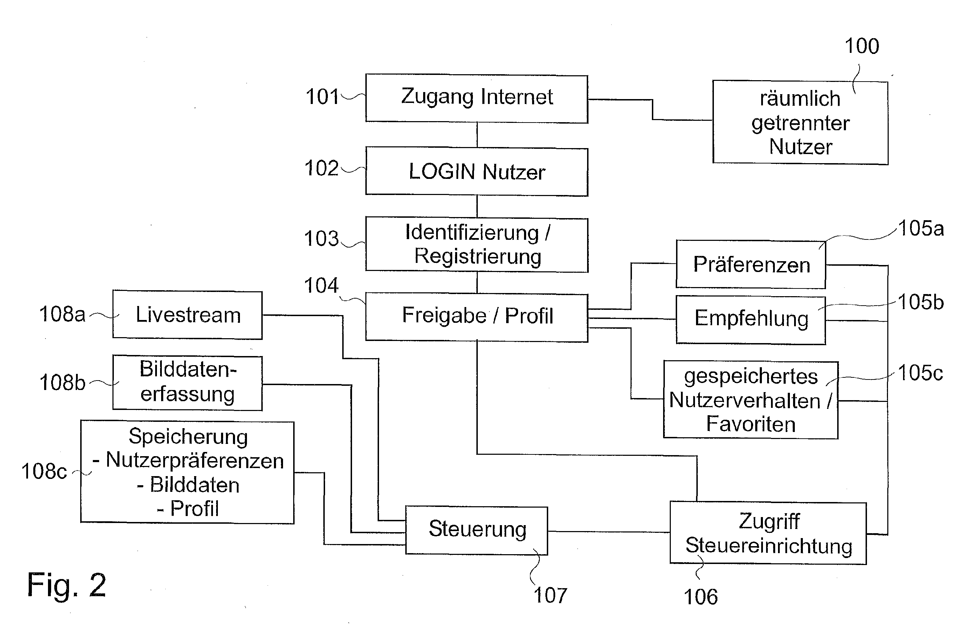

Fig. 2 zeigt schematisiert eine Ausführungsform eines Zugriffs auf die Präsentationsvorrichtung 10. Hierbei greift ein räumlich getrennter Nutzer 100 über einen Internetzugang 101 auf die Präsentationsvorrichtung 10 zu. Der Zugriff erfolgt nach Login 102 des Nutzers. Die Speichereinheit 23 (vgl. Fig. 1) kann gleichzeitig als Datenerfassungs- beziehungsweise Datenauswerteeinheit zum Einen für die Nutzerdaten, zum Anderen für die erfassten Bilddaten ausgebildet werden. Es erfolgt somit in einem weiteren Schritt eine Identifizierung 103 des Nutzers. Ist der Nutzer noch nicht registriert, so kann hier eine Registrierung durchgeführt werden. Nach Identifizierung 103 des Nutzers 100 erhält dieser eine Freigabe 104 entweder direkt auf die Steuereinrichtung 17 der Präsentationsvorrichtung 10 oder aber auf sein bereits hinterlegtes Profil. Im Profil abgelegt beziehungsweise eingestellt werden Präferenzen 105a sowie ein Nutzerverhalten beziehungsweise Favoriten 105c, das heißt Bildperspektiven und Objekte, die der Nutzer bevorzugt oder mehrfach aufgesucht und betrachtet hat. Das Nutzerverhalten 105c speichert gleichzeitig die vom Nutzer angewählten beziehungsweise ausgeführten oder eingestellten Kamera- und Objektpositionen, um somit ein Profil über das Nutzerverhalten erstellen zu können. Zusätzlich erhält der Nutzer auch Empfehlungen 105b für weitere Darstellungspositionen oder weitere seinen Präferenzen 105a entsprechende Präsentationsobjekte 12. Der räumlich getrennte Nutzer 100 erhält nach Freigabe 104 somit entweder über sein Profil und/oder direkt Zugriff 106 auf die Steuereinrichtung 17 und erhält somit die Möglichkeit, über die Steuerung 107 eine Positionierung der Präsentationseinheit 11 beziehungsweise der Kameras 13 entsprechend seinen Vorstellungen und Präferenzen durchzuführen, um verschiedene Blickwinkel auf das Präsentationsobjekt 12 zu erhalten. Die Steuerung 107 ermöglicht somit die ferngesteuerte Bedienung der Präsentationsvorrichtung 10. Die Ausgabe der erfassten Bilddaten erfolgt dann in einem Live-Stream 108a über das Internet, sodass der räumlich getrennte Nutzer 100 umgehend erkennt, wie sich die von ihm übertragenen Steuerbefehle auf die Präsentationsvorrichtung 10 auswirken. Parallel kann eine Bilddatenerfassung 108b vorgesehen werden, sodass die jeweiligen Steuervorgänge für den räumlich getrennten Nutzer 100 später nochmal durchgeführt werden können beziehungsweise die erfassten Bilder für eine spätere Betrachtung zur Verfügung stehen. Zusätzlich erfolgt eine Speicherung 108c der Bilddaten der Nutzer und somit ein Update des Nutzerprofils anhand der ausgegebenen Steuerbefehle beziehungsweise der erfassten Bilddaten und zusätzlicher Informationen.

Der Zugang des räumlich getrennten Nutzers 100 zur Präsentationsvorrichtung erfolgt entweder über das Internet oder über einen mobile Datenverbindung. Alternativ oder parallel besteht selbstverständlich auch die Möglichkeit, dass ein Zugriff über ein Netzwerk erfolgt. Auch die Ausgabe der Bilddaten oder des Live-Streams 108a kann über eine Internetverbindung, eine mobile Verbindung oder eine Netzwerkverbindung erfolgen.

Die jetzt mit der Anmeldung und später eingereichten Ansprüche sind ohne Präjudiz für die Erzielung weitergehenden Schutzes.

Sollte sich hier bei näherer Prüfung, insbesondere auch des einschlägigen Standes der Technik, ergeben, dass das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist. Auch eine solche Unterkombination ist von der Offenbarung dieser Anmeldung abgedeckt.

Es ist weiter zu beachten, dass die in den verschiedenen Ausführungsformen beschriebenen und in den Figuren gezeigten Ausgestaltungen und Varianten der Erfindung beliebig untereinander kombinierbar sind. Dabei sind einzelne oder mehrere Merkmale beliebig gegeneinander austauschbar. Diese Merkmalskombinationen sind ebenso mit offenbart.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die nur in der Beschreibung offenbart wurden oder auch Einzelmerkmale aus Ansprüchen, die eine Mehrzahl von Merkmalen umfassen, können jederzeit als von erfindungswesentlicher Bedeutung zur Abgrenzung vom Stande der Technik in den oder die unabhängigen Anspruch/Ansprüche übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Präsentationsvorrichtung (10) umfassend:
- eine Präsentationseinheit (11) zur Anordnung eines Präsentationsobjektes (12),
**dadurch gekennzeichnet, dass** eine Fernsteuerung von Bewegungen der Präsentationseinheit (11) vorgesehen ist.

2. Präsentationsvorrichtung (10) nach Anspruch 1, **gekennzeichnet durch** wenigstens eine bevorzugt zwei oder mehr Kameras zur Erfassung, insbesondere dreidimensionalen Erfassung der Präsentationseinheit und/oder des Präsentationsobjektes.

3. Präsentationsvorrichtung nach Anspruch 2, **dadurch gekennzeichnet, dass** eine Fernsteuerung der Kamera(s) (13) beziehungsweise von Kamerabewegungen vorgesehen ist, insbesondere wobei als Bewegung eine Drehung und/oder Verschwenkung der Präsentationseinheit (11), insbesondere um eine oder mehrere Dreh- oder Schwenkachse(n) (14) vorgesehen ist und/oder die Präsentationseinheit (11) als um eine Drehachse (14) drehbarer Tisch oder Teller (15) ausgebildet ist und/oder die Fernsteuerung (19) kabellos erfolgt, insbesondere wobei eine örtlich oder räumlich von der Präsentationsvorrichtung (10) getrennte Fernsteuerung (19) vorgesehen ist und/oder eine netzwerk- oder internetübertragene Fernsteuerung (19) vorgesehen ist.

4. Präsentationsvorrichtung (10) nach einem der vorhergehenden Ansprüche, **dadurch gekennzeichnet, dass** der Präsentationsvorrichtung (10) eine Empfangseinrichtung (16) für Steuerbefehle und eine Steuereinrichtung (17) für die Umsetzung der empfangenen Steuerbefehle in eine Bewegung, insbesondere Drehung oder Verschwenkung der Präsentationseinheit (11) und/oder Kamera(s) (13) zugeordnet ist und/oder die Präsentationseinheit (11) und/oder die Kamera(s) (13) wenigstens einen Drehantrieb (18) aufweist/en, insbesondere wobei die Steuereinrichtung (17) zur Steuerung des wenigstens einen Drehantriebes (18) vorgesehen ist.

5. Präsentationsvorrichtung (10) nach Anspruch 4, **dadurch gekennzeichnet, dass** die Empfangseinrichtung (16) geeignet ist, Steuerbefehle von einem örtlich von der Präsentationsvorrichtung (10) getrennten Nutzer (20) oder einer Bedienperson zu empfangen und/oder die Empfangseinrichtung (16) geeignet ist, eine Registrierung, Freigabe und/oder Priorisierung des Nutzers (20) und/oder von Nutzeranfragen und/oder eine Speicherung der Steuerbefehle durchzuführen, insbesondere wobei eine Anbindung der Empfangseinrichtung (16) an ein Datennetz vorgesehen ist, wobei die Steuerbefehle über das Datennetz (21) übertragbar sind, wobei die Anbindung bevorzugt als W-LAN-, LAN-, Bluetooth-, Mobilfunknetz-, UMTS-, Telefonnetz-, Datenkabelnetz-, Stromnetz- oder Funkverbindung ausgebildet ist.

6. Präsentationsvorrichtung (10) nach einem der Ansprüche 4 oder 5, **dadurch gekennzeichnet, dass** die Empfangseinrichtung (16) geeignet ist, von einem Mobilgerät (22) gesendete Steuerbefehle zu empfangen und/oder die Empfangseinrichtung (16) USB-, Bluetooth-, W-LAN-, LAN- oder Funkkonnektivität aufweist und/oder die Präsentationseinheit (11) und/oder die Kamera(s) (13) kabelgebunden, insbesondere per USB oder Netzwerkkabel oder kabellos mit der Steuereinrichtung (17) oder der Empfangseinrichtung (16) verbindbar ist/sind.

7. Präsentationsvorrichtung (10) nach einem der vorhergehenden Ansprüche, **gekennzeichnet durch** eine Datenerfassungs-, Datenauswertungs- und/oder Speichereinheit (23) für die Erfassung, Auswertung und/oder Speicherung von
- **durch** die Kamera(s) (13) aufgenommene Bilddaten,
- Steuerbefehlen,
- Präsentationseinheit- und/oder Kamera-Position(en),
- Nutzungszeiten,
- Nutzern,
- Nutzerverhalten und/oder
- Nutzerprofilen.

8. Präsentationsvorrichtung (10) nach einem der vorhergehenden Ansprüche, **gekennzeichnet durch** eine Datenausgabe- und/oder Sendeeinheit (24) für von der oder den Kamera(s) (13) aufgenommene Bilddaten, insbesondere wobei die Datenausgabe- und/oder Sendeeinheit (24) als Display, Bildschirm oder Projektor ausgebildet ist und/oder ein Display, einen Bildschirm oder einen Projektor aufweist und/oder eine Anbindung der Datenausgabe- und/oder Sendeeinheit an ein Datennetz (21) vorgesehen ist, wobei die von der oder den Kamera(s) (13) erfassten Bilddaten über das Datennetz (21) an eine Anzeigevorrichtung, insbesondere an eine räumlich von der Datenausgabe- und/oder Sendeeinheit getrennte Anzeigevorrichtung übertragbar sind, insbesondere wobei die Anbindung als W-LAN-, LAN-, Bluetooth-, Mobilfunknetz-, UMTS-, Telefonnetz-, Datenkabelnetz-, Stromnetz- oder Funkverbindung ausgebildet ist und/oder die Datenausgabe- und/oder Sendeeinheit (24) geeignet ist, Bilddaten direkt an ein Mobilgerät (22) zu übertragen und/oder die Datenausgabe- und/oder Sendeeinheit (24) USB-, Bluetooth-, W-LAN- oder LAN-Konnektivität aufweist.

9. Präsentationsvorrichtung (10) nach Anspruch 8, **dadurch gekennzeichnet, dass** die Datenerfassungs-, Datenauswertungs- und/oder Speichereinheit (23) ein Nutzeridentifizierungs- und/oder Nutzerfreigabesystem beinhaltet.

10. Präsentationsvorrichtung (10) nach einem der vorhergehenden Ansprüche, **dadurch gekennzeichnet, dass** die Präsentationseinheit (11) relativ zu der oder den Kameras (13) und/oder die Kamera(s) (13) relativ zu der Präsentationseinheit (11) bewegbar, insbesondere drehbar ist/sind und/oder die Präsentationsvorrichtung (10) mehrere Präsentationseinheiten (11) und/oder Kameras (13) aufweist und wobei die zur Verwendung vorgesehene Präsentationseinheit (11) und/oder Kamera(s) (13) vom Nutzer (20) auswählbar ist/sind und/oder die Empfangseinrichtung (16), die Steuereinrichtung (17), die Datenerfassungs-, Datenauswertungs- und/oder Speichereinheit (23) und/oder die Datenausgabe- und/oder Sendeeinheit (24) in einem Gerät, insbesondere einem Computer zusammengefasst vorgesehen und die Präsentationseinheit (11) und die Kamera(s) (13) mit dem Gerät verbindbar ist/sind und/oder die erfassten Bilddaten als Einzelbild, Bildsequenz oder Livestream darstellbar und/oder über das Internet oder ein Netzwerk abrufbar sind.

11. Verfahren zur Zugriffssteuerung auf eine Präsentationsvorrichtung, insbesondere eine Präsentationsvorrichtung gemäß einem der Ansprüche 1 bis 10, umfassend die Schritte:
a) Empfangen von Steuerbefehlen von insbesondere räumlich von der Präsentationsvorrichtung getrennten Nutzern,
b) Umsetzen der Steuerbefehle in eine Bewegung der Präsentationsvorrichtung.

12. Verfahren nach Anspruch 11, **dadurch gekennzeichnet, dass** die Steuerbefehle über ein Netzwerk oder eine Internetverbindung übertragen werden und/oder eine Umsetzung der Steuerbefehle in eine Drehung und/oder Verschwenkung einer Präsentationseinheit und/oder einer Kamera vorgesehen ist.

13. Verfahren nach einem der Ansprüche 11 oder 12, **dadurch gekennzeichnet, dass** vor dem Empfangen oder dem Umsetzen der Steuerbefehle eine Registrierung oder Freigabe der Nutzer vorgesehen ist und/oder vor dem Umsetzen der Steuerbefehle eine Priorisierung von Nutzeranfragen erfolgt und/oder der Empfang von mit einem Mobilgerät gesendeten Steuerbefehlen vorgesehen ist.

14. Verfahren nach einem der Ansprüche 11 bis 13, **dadurch gekennzeichnet, dass** eine Erfassung, Auswertung und/oder Speicherung von
- durch die Kamera(s) (13) aufgenommenen Bilddaten,
- Steuerbefehlen,
- Präsentations- und/oder Kameraposition(en),
- Nutzungszeiten,
- Nutzern,
- Nutzerverhalten und/oder
- Nutzerprofilen
erfolgt.

15. Verfahren nach einem der Ansprüche 11 bis 14, **dadurch gekennzeichnet, dass** die Ausgabe von erfassten Bilddaten über das Datennetz an eine Anzeigevorrichtung, insbesondere an eine räumlich von der Datenausgabe- und/oder Sendeeinheit getrennte Anzeigenvorrichtung vorgesehen ist und/oder die erfassten Bilddaten direkt an ein Mobilgerät (22) übertragen werden und/oder die erfassten Bilddaten als Einzelbild, Bildsequenz oder Livestream dargestellt und/oder über das Internet oder ein Netzwerk versendet werden und/oder über das Internet oder ein Netzwerk abrufbar sind und/oder eine Zugriffssteuerung auf mehrere Präsentationseinheiten und/oder Kameras vorgesehen ist.
